# EUROPEAN PATENT SPECIFICATION

(11) **EP 1 193 587 B1**
(45) Date of publication and mention of the grant of the patent: **25.07.2012**
(21) Application number: 01307911.6
(22) Date of filing: 18.09.2001
(51) Int. Cl.: G06F 1/00

(54) **Data protection**
Datenschutz
Protection de données

(30) Priority: 27.09.2000 GB 0023616
(43) Date of publication of application: 03.04.2002
(73) Proprietor: Fujitsu Services Limited, London, EC2A 1SL (GB)
(72) Inventor: Richardson Gardner, Paul Anton, Burnham, Buckinghamshire SL1 7HT (GB); Holt, Nicholas Peter, Glossop, Derbyshire SK13 1ET (GB); Battle, Nicholas Charles, Bracknell, Berkshire RG42 4UD (GB)
(74) Representative: Clark, David James

(56) References cited:
- EP-A2- 0 991 005
- FISCHER-HÜBNER, SIMONE, OTT, AMON: "From a Formal Privacy Model to Its Implementation" PROC. 21ST NATIONAL INFORMATION SYSTEMS SECURITY CONFERENCE, 5 October 1998 (1998-10-05), - 8 October 1998 (1998-10-08) XP002314873 ARLINGTON, VA, USA
- DREYER L C J ET AL: "A workbench for privacy policies" COMPUTER SOFTWARE AND APPLICATIONS CONFERENCE, 1998. COMPSAC '98. PROCEEDINGS. THE TWENTY-SECOND ANNUAL INTERNATIONAL VIENNA, AUSTRIA 19-21 AUG. 1998, LOS ALAMITOS, CA, USA,IEEE COMPUT. SOC, US, 19 August 1998 (1998-08-19), pages 350-355, XP010305456 ISBN: 0-8186-8585-9
- ARLEIN R M ET AL: "Privacy-Preserving Global Customization" EC'00. PROCEEDINGS OF THE 2ND. ACM CONFERENCE ON ELECTRONIC COMMERCE. MINNEAPOLIS, MN, OCT. 17-20, 2000, ACM CONFERENCE ON ELECTRONIC COMMERCE, NEW YORK, NY : ACM, US, vol. CONF. 2, 17 October 2000 (2000-10-17), - 20 October 2000 (2000-10-20) pages 176-181, XP002307794 ISBN: 1-58113-272-7

## Description

This invention relates to data protection, and in particular to support for data privacy policies.

The European Union Directive on Data Protection, now enacted in legislation in most EU states, introduces new concepts which cannot be addressed in a scaleable or manageable fashion by traditional security mechanisms. Of central importance are the concepts of "personal data", "data subject" (to whom personal data relates), and "Purpose" for which personal data is obtained and processed. Personal data is defined as any information relating to an identified or identifiable natural person ("data subject"). An identifiable person is one who can be identified, directly or indirectly, in particular by reference to an identification number or to one or more factors specific to his physical, physiological, mental, economic, cultural or social identity.

The Directive requires that "appropriate technical and organisational measures must be implemented to protect personal data against accidental or unlawful destruction or accidental loss and against unauthorised alteration, disclosure or access, [...] and against all other unlawful forms of processing". This may be interpreted as requiring that application or system security measures must prevent users from accessing Personal Data which is not "relevant" to the (current) purpose of processing. The Directive further requires that personal data may be processed only if "the data subject has given his consent unambiguously". Moreover, the Directive accords a set of legal rights to the data subject, including the explicit right to prevent processing for purposes of direct marketing.

It will be appreciated from the foregoing summary that the EU Directive (and the consequent legislation introduced by member states) introduces a requirement for technical features which are not readily supportable by current systems or security mechanisms. The main technical requirements can be summarised as follows:
- Ensuring that personal data is only processed for the purpose(s) for which it was obtained or consent has been granted by the Data Subject; and
- Ensuring that users only have access to personal data which is relevant to the current processing purpose.

These requirements could be met by maintaining data for different purposes on different systems and controlling the passage of data between the systems. However, this approach runs directly counter to the desire of an increasing number of businesses to integrate personal data across multiple products, services or offerings.

In a paper entitled "From a Formal Privacy Model to its Implementation", published in 1998, Simone Fischer-Hubner and Amon Ott, of the Faculty for Informatics, University of Hamburg, Germany, described an extended "Privacy Model" which can be used to enforce legal privacy requirements in a system. However, the reported model and implementation result in a substantial storage overhead: for each data subject, it is necessary to maintain information detailing each object of personal data and the purpose(s) for which the data subject has given consent.

It is an object of the present invention to provide means whereby applications and systems can be constructed with efficient storage and verifiable implementation of standard privacy policies.

### Summary of the Invention

According to the present invention there is provided a data processing system as set out in claim 1.

According to the present invention there is provided an apparatus and method as set forth in the appended claims. Other features of the invention will be apparent from the dependent claims, and the description which follows.

It will be seen that, by using privacy policies, the overhead storage requirement associated with data access control can be greatly reduced. Fore each data subject, it is necessary only to record information identifying the privacy policy which applies to that data subject, which is potentially much more efficient that the scheme referred to above.

### Brief description of the drawings

Figure 1 is a block diagram of data processing system including an access control mechanism.
Figure 2 illustrates a data schema (information model) and a corresponding privacy policy structure.
Figure 3 is a flow chart showing the operation of the personal data access mechanism.
Figure 4 illustrates another data schema and a corresponding privacy policy structure.
Figure 5 illustrates a possible modification to the privacy policy structure of Figure 4.

### Description of an embodiment of the invention

One data security system and method in accordance with the invention will now be described by way of example with reference to the accompanying drawings.

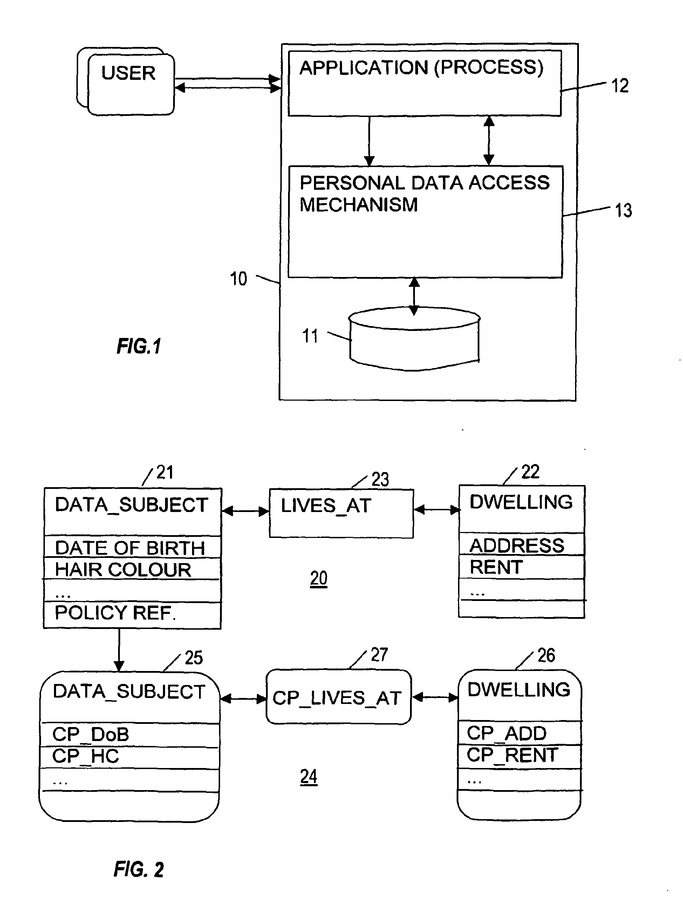

Figure 1 shows a computer system 10, including a data storage system 11 (for example, a relational database) for storing personal data. The data storage system can be accessed by one or more applications (processes) 12, by way of a mediating component, referred to herein as the personal data access mechanism (PDAM) 13, which enforces privacy policies, as will be described. In a preferred embodiment, the application(s) and the PDAM are both object-oriented, but the invention is applicable to other software approaches.

The data stored in the storage system has a structure defined by a data schema (information model), in the form of a graph including nodes (representing objects) and arcs (representing relationships between objects). Figure 2 shows an example of a possible data schema 20. The schema includes two nodes (Data_Subject 21 and Dwelling 22) which are linked by a relationship (Lives_At 23). The Data_Subject node includes fields containing personal information such as date of birth, hair colour, and also a policy reference pointing to a particular privacy policy (see below). The Dwelling node contains fields such as address and rent.

The data schema indicates the paths by which items of data can be accessed. For example, in Figure 2 the Dwelling data is accessed by navigating from the Data_Subject node by way of the Lives_At relationship.

The data storage system also stores a set of privacy policies. Each privacy policy is defined by a structure of nodes and arcs similar to that of the data schema itself. For example, Figure 2 shows a privacy policy structure 24 having two nodes 25, 26 and a relationship 27, corresponding to items 21, 22 and 23 in the data schema.

Each object (node or arc) in the privacy policy structure contains one or more consented purpose expressions CP for the corresponding object in the data schema. Each consented purpose CP defines the purpose(s) for which an application may access data in a node or traverse an arc in the data schema. For example, in Figure 2, the Data_Subject node 25 contains fields CP_DoB and CP_HC indicating the consented purposes for accessing the date of birth and hair colour fields in the node 21. Similarly, the Lives_At node 27 contains a field indicating the consented purposes for traversing the arc 23 in the data schema.

Each consented purpose CP comprises a boolean expression, consisting of a set of primitive purpose identifiers combined using logical operators 'and', 'or', 'not', and brackets '()'. For example, a consented purpose expression may be:
(BILLING and (GAS or ELECTRIC))
This indicates that the corresponding item of personal data may be accessed for purposes connected with gas or electricity billing, but no other.

Preferably, a number of standard privacy policies are defined in the system, and each individual is initially asked to select and to consent to one of these policies. The number of defined privacy policies will thus, in general, be much smaller than the number of individuals about whom data is stored; i.e. each privacy policy will be shared between several (or many) persons. The policy reference of the selected privacy policy is recorded in the Data_Subject object, as described above.

When an application 12 requires to access personal data in the storage 11, it sends a request to the PDAM 13. The request specifies the identity of the data subject, the required data, and the current processing purpose associated with the application. The current processing purpose is specified by a boolean expression in a similar way to the consented purposes as described above. For example, the current processing purpose of an application concerned with processing gas bills may be specified as (GAS and BILLING). Alternatively, the current processing purpose of an application concerned with marketing may be specified as DIRECT_MARKETING.

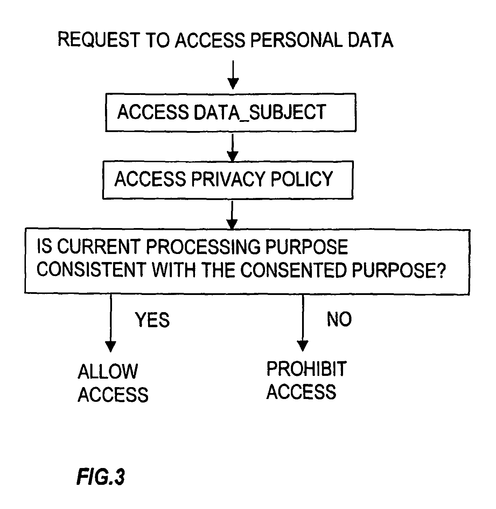

When the PDAM 13 receives this request, it performs the following actions as shown in Figure 3.

First, the PDAM accesses the Data_Subject object associated with the data subject, to obtain the policy reference of the privacy policy associated with this data subject.

The PDAM then uses this policy reference to access the corresponding privacy policy object, to obtain the consented purpose expression for the data item that is to be accessed.

The PDAM then checks whether the current processing purpose specified by the application is consistent with the consented purpose. This is achieved by substituting boolean values from the current processing purpose expression into the consented purpose expression. If the expression evaluates to TRUE, access is permitted, otherwise access is forbidden.

For example, suppose that the current processing purpose is:
GAS and BILLING
and the consented purpose is:
((BILLING and (GAS or ELECTRIC)) and (not MARKETING)).
In this case, substituting the boolean value TRUE for both GAS and BILLING into the consented purpose expression gives:
((TRUE and (TRUE or FALSE)) and (not FALSE))
which evaluates to TRUE. Therefore access is permitted.

It will be appreciated that in this example if the current processing purpose had included MARKETING, the expression would have evaluated to FALSE and access would not have been permitted.

As the application navigates around different objects in the data schema 20, the PDAM keeps track of the corresponding location in the privacy policy structure 24. At each step in the navigation, the PDAM checks whether the consented purpose of the object, as defined in the privacy policy, is compatible with the current processing purpose. For example, in Figure 2, if the application attempts to navigate from a Data_Subject object to a Dwelling object by way of the Lives_At relationship, the PDAM checks the CP of the relationship to ensure that it is compatible with the current processing purpose, before allowing this navigation.

The correspondence between the data schema and the privacy policy structure need not always be an exact isomorphism. Indeed, it is likely that the structure will usually be a tree, representing an "unravelling" of the data schema graph. Where a particular relationship may be traversed multiple times, there may be more than one node in the privacy policy structure corresponding to a single node in the data schema.

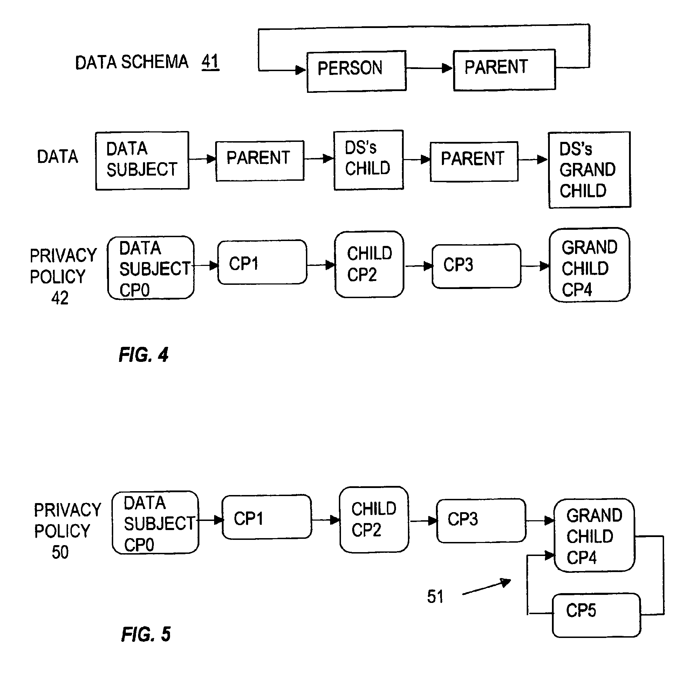

For example, in Figure 4, a data schema 41 comprises a recursive graph comprising just two nodes: a Person object and a Parent-Child relationship. The corresponding privacy policy structure 42 comprises an unravelling of this graph, and includes separate nodes for Data Subject, Child and Grandchild, all corresponding to the Person node in the data schema. Each traversal of the parent-child relationship reaches a new node in the privacy policy structure, so that each generation (relative to the data subject) can have different consented purposes (i.e. CP1 and CP2 may differ from CP3 and CP4 respectively). Thus, it is possible for a privacy policy to specify different consented purposes for data relating to the children and grandchildren of the data subject.

Figure 5 shows a modification of the privacy policy structure of Figure 4. In this case, the structure 50 has a recursive sub-graph 51. This allows one consented purpose CP2 for the data subject's children, but thereafter a single consented purpose CP4 for the grand-children and subsequent generations.

It can be seen that because consented purposes are associated with the arcs in the data schema, data protection access control can be based on the route by which an application navigates to an item of personal data. This makes it possible for the same item to have different consented purposes, depending on how the application navigates to that object. For example, a data schema may define two relationships respectively indicating the data subject's partner and beneficiary. These may refer to the same individual. However, for the purpose of processing a life insurance contract for example, the system may allow navigation only from the data subject to the subject's beneficiary, while prohibiting navigation to the subject's partner.

### Some possible modifications

It will be appreciated that many modifications can be made to the system as described above without departing from the scope of the invention as defined in the appended claims.

For example, a single privacy policy may be applied across all data subjects. In this case, the storage of the (single) policy definition may be combined with the data schema (information model) definition.

The privacy policy structure may have multiple roots, rather than being rooted at a single data subject. For example, in cases where there are joint parties to a contract (e.g. husband and wife), it is likely to be necessary ("relevant") to access personal data of all (both) the parties. Once these roots are established, navigation of the pattern proceeds as described above. The tests are slightly different at points where variations occur, and optionally the consent of any (either) or all (both) data subjects may be required.

It will be appreciated that the greatest benefit (in terms of the amount of storage overhead and administrative effort) is obtained when the data subject may only choose from a limited set of standard privacy policies. However, some organisations may choose or need to offer individuals the opportunity to agree minor variations on standard privacy policies. In the limit, if each individual chose to opt for some variation, the number of policies maintained by the system would rise dramatically. In a modification of the invention, individual policy variations can be defined, without having to construct individual policy definitions for each variation, by maintaining additional information in data storage with each item of personal data which can override the current policy, or specify an alternative standard (sub-)policy for the current navigation path.

Alternatively or additionally, specific variations can be accommodated by arranging for certain entity types to have an optional privacy policy override attribute which, unless defaulted (null), refers to the root of (some sub-graph of) a privacy policy structure. It will be recalled that the PDAM has to keep track of the node in the privacy policy structure corresponding to each object accessed. When an object is encountered with a non-null privacy policy override attribute, the PDAM substitutes the node which is the root of the new privacy policy for the node of the original privacy policy.

The basic arrangement described above assumes that the annotations in the privacy policy structure are simple, static purpose expressions. Additional annotations in the privacy policy structure (or, according to the previous paragraph, recorded with individual items of personal data) may invoke predicates or rules, or application call-backs to perform more complex access control decisions. This allows arbitrarily complex access control decisions to be implemented.
Furthermore, the invoked code could access one or more other databases, for example, to record application specific privacy audit trails, or to look up application specific privacy policy reference data.

The basic arrangement proposes simple, unstructured literal identifiers for purposes. In practice, it is common for the relationship between an organisation and its customers to have a natural hierarchy of purposes. For example, there might be an overall purpose associated with maintaining the overall customer relationship, with subsidiary purposes for each contracted product or service offered by the organisation; within each product there might be subsidiary purposes associated with different business functions - for example, contract management, supply, billing, payment etc. Thus the purpose associated with billing a customer for gas supplies would be represented as a Hierarchic Purpose Identifier:
CUSTOMER.GAS.BILLING

The algorithm for performing data protection access control checks must be correspondingly enhanced to handle hierarchic purpose identifiers. Specifically, a boolean TRUE value is substituted for each purpose identifier in the consented purposes expression, for which one or more of the identifiers specified in the "activity purposes" is a prefix. For example, if a consented purposes expression contained the element "AA.BB.CC", then boolean TRUE would be substituted for the element (according to the data protection access control checking procedure described above) if the "activity purposes" included any of "AA", "AA.BB", or "AA.BB.CC".

This enhancement simplifies the management of purposes, since it allows a set of purposes can be grouped under a composite, or more general, purpose. Thus, when the customer consents to use of an item of personal data for the composite purpose, only the composite purpose need be specified in the purpose expression, rather than each individual component purpose.

The EU Directive, and consequent legislation enacted by member states, distinguishes a class of personal data which is deemed to be "Sensitive". Sensitive data is defined as "data revealing racial or ethnic origin, political opinions, religious or philosophical beliefs, trade-union membership, and the processing of data concerning health or sex life. For non-sensitive personal data implicit consent for processing for some purpose may be deemed to have been granted by a data subject, for example, by entering into a contract. For sensitive data, it is necessary to obtain the data subject's explicit consent.

It will be appreciated that the necessity to obtain the data subject's explicit consent for processing a particular item of sensitive personal data is determined by the regulatory environment in which processing takes place, and hence is common for all instances of a particular item (type) of personal data.

The requirement, or otherwise, to obtain explicit consent can therefore be conveniently recorded as a (class) property in the data schema. This automatically ensures that the requirement is consistently applied to all instances.

Furthermore, an organisation may choose to define a set of policies and processes for obtaining consent for particular types of personal data. Such policy information can also be conveniently recorded as (class) properties in the data schema.

## Claims

1. A data processing system comprising:
(a) data storage means (11) for storing personal data relating to a plurality of data subjects;
(b) at least one agent (12) for accessing the data; and
(c) access control means (13) for controlling access to the personal data by the agent in accordance with the wishes of the data subjects;
(d) means for defining a privacy policy structure (24) comprising a plurality of standard privacy policies , each privacy policy specifying a respective set of consented purposes for the personal data in terms of an expression consisting of a set of primitive purpose identifiers combined using logical operators, tne number of privacy policies being substantially smaller than the number of data subjects;
(e) means for storing, for eacn of the data subjects, a reference to one of the privacy policies, thereby associating one of the privacy policies with each data subject, whereby each privacy policy may be shared between a plurality of data subjects;
(f) means for associating a current processing purpose with said agent; and
(g) means for permitting said agent to access personal data relating to a data subject only if the current processing purpose of the agent is compatible with the consented purposes for that data as specified by the privacy policy associated with the data subject, and further including:
(a) means for specifying a cata schema (20) comprising a graph including a plurality of noces linked by arcs, the nodes representing items of personal data and the arcs representing routes by which the system can navigate between the nodes;
(b) each of said plurality of privacy policies comprising means for associating respective consented purposes with said nodes and arcs as a consented purpose expression; and
(c) said access control means permitting traversal of an arc only if said current processing purpose is compatible with the consented purpose associated with that arc, and permitting access to a node only if said current processing purpose is compatible with the consented purpose associated with that node by keeping track of the location in the data schema (20) and the location in the privacy policy structure (24), thereby keeping track of the route by which tne current node has been navigated to in tne data schema (20).

2. A system as claimed in claim 1, wherein said data schema specifies a plurality of routes available for navigation to a particular node, and wherein different consented purposes are respectively associated with said routes.

3. A computer implemented method for controlling access by at least one agent to personal data relating to a plurality of data subjects in accordance with the wishes of the data subjects,
the method comprising the steps:
(a) defining a privacy policy structure (24) comprising a plurality of standard privacy policies, each privacy policy specifying a respective set of consented purposes for the personal data in terms of an expression consisting of a set of primitive purpose identifiers combined using logical operators, the number of privacy policies being substantially smaller than the number of data subjects;
(b) storing, for each of the data subjects, a reference to one of the privacy policies, thereby associating one of the privacy policies with each data subject, whereby each privacy policy may be shared between a plurality of data subjects;
(c) associating a current processing purpose with said agent; and
(d) permitting said agent to access personal data relating to a data subject only if the current processing purpose of the agent is compatible with the consented purposes for that data as specified by the privacy policy associated with the data subject, and further including:
(a) specifying a data schema comprising a graph including a plurality of nodes linked by arcs, the nodes representing items of personal data and the arcs representing routes by which the system can navigate between the nodes;
(b) in each said privacy policy, associating respective consented purposes with said nodes and arcs as a consented purpose expression; and
(c) permitting traversal of an arc only if said current processing purpose is compatible with the consented purpose associated with that arc, and permitting access to a node only if said current processing purpose is compatible with the consented purpose associated with tnat node by keeping track of the location in the data schema (20) and the location in the privacy policy structure (24), thereby keeping track of the route by which the current node has been navigated to in the data schema (20).

4. A method as claimed in claim 3, wherein said data schema specifies a plurality of routes available for navigation to a particular node, and wherein different consented purposes are respectively associated with said routes.

## Patentansprüche

1. Datenverarbeitungssystem, umfassend:
(a) ein Datenspeichermittel (11) zum Speichern von personlichen Daten in Bezug auf mehrere Datensubjekte;
(b) mindestens einen Agenten (12) zum Zugreifen auf die Daten; und
(c) ein Zugriffskontrollmittel (13) zum Kontrollieren des Zugriffs auf die personlichen Daten durch den Agenten gemäß den Wünschen der Datensubjekte;
(d) ein Mittel zum Definieren einer Privatspharenrichtlinienstruktur (24), die mehrere Standard-Privatspharenrichtlinien umfasst, wobei Jede Privatspharenrichtlinie eine jeweilige Menge von zugestimmten Zwecken fur die personlichen Daten im Hinblick auf einen Ausdruck, der aus einer Menge von primitiven Zweckkennungen, kombiniert unter Verwendung logischer Operatoren, besteht, spezifiziert, wobei die Anzahl der Privatspharenrichtlinien im Wesentlichen kleiner als die Anzahl der Datensubjekte ist;
(e) fur jedes der Datensubjekte ein Mittel zum Speichern eines Verweises auf eine der Privatspharenrichtlinien, um **dadurch** mit jedem Datensubjekt eine der Privatspharenrichtlinien zu assoziieren, wodurch jede Privatspharenrichtlinie zwischen mehreren Datensubjekten geteilt werden kann;
(f) ein Mittel zum Assoziieren eines aktuellen Verarbeitungszwecks mit dem Agenten; und
(g) ein Mittel, um es dem Agenten zu gestatten, auf personliche Daten in Bezug auf ein Datensubjekt zuzugreifen, nur dann, wenn der aktuelle Verarbeitungszweck des Agenten mit den zugestimmten Zwecken fur diese Daten, die durch die mit dem Datensubjekt assoziierte Privatspharenrichtlinie spezifiziert werden, kompatibel ist, und ferner umfassend:
(a) ein Mittel zum Spezifizieren eines Datenschemas (20), das einen Graph mit mehreren durch Bogen verbundene Knoten umfasst, wobei die Knoten Posten personlicher Daten repräsentieren und die Bogen Routen repräsentieren, durch die das System zwischen den Knoten navigieren kann;
(b) fur jede der mehreren Privatspharenrichtlinien Mittel zum Assoziieren jeweiliger zugestimmter Zwecke mit den Knoten und Bogen als einen Ausdruck zugestimmter Zwecke; und
(c) das Zugriffskontrollmittel gestattet Durchquerung eines Bogens nur dann, wenn der aktuelle Verarbeitungszweck mit dem mit diesem Bogen assoziierten zugestimmten Zweck kompatibel ist, und gestattet Zugriff auf einen Knoten nur dann, wenn der aktuelle Verarbeitungszweck mit dem mit diesem Knoten assoziierten zugestimmten Zweck kompatibel ist, indem der Ort in dem Datenschema (20) und der Ort in der Privatspharenrichtlinienstruktur (24) verfolgt wird, um **dadurch** die Route zu verfolgen, auf der in dem Datenschema (20) zu dem aktuellen Knoten navigiert wurde.

2. System nach Anspruch 1, wobei das Datenschema mehrere Routen spezifiziert, die fur Navigation zu einem bestimmten Knoten verfugbar sind, und wobei jeweils verschiedene zugestimmte Zwecke mit der Route assoziiert sind.

3. Computerimplementiertes Verfahren zum Kontrollieren des Zugriffs durch mindestens einen Agenten auf personliche Daten in Bezug auf mehrere Datensubjekte gemäß den Wünschen der Datensubjekte, wobei das Verfahren die folgenden Schritte umfasst:
(a) Definieren einer Privatspharenrichtlinienstruktur (24), die mehrere Standard-Privatspharenrichtlinien umfasst, wobei Jede Privatspharenrichtlinie eine jeweilige Menge von zugestimmten Zwecken fur die personlichen Daten im Hinblick auf einen Ausdruck, der aus einer Menge von primitiven Zweckkennungen, kombiniert unter Verwendung von logischen Operatoren, besteht, spezifiziert, wobei die Anzahl der Privatspharenrichtlinien im Wesentlichen kleiner als die Anzahl der Datensubjekte ist;
(b) fur jedes der Datensubjekte Speichern eines Verweises auf eine der Privatsphärenrichtlinien, um **dadurch** mit jedem Datensubjekt eine der Privatsphärenrichtlinien zu assoziieren, wodurch jede Privatsphärenrichtlinie zwischen mehreren Datensubjekten geteilt werden kann;
(c) Assoziieren eines aktuellen Verarbeitungszwecks mit dem Agenten; und
(d) dem Agenten nur dann gestatten, auf personliche Daten in Bezug auf ein Datensubjekt zuzugreifen, wenn der aktuelle Verarbeitungszweck des Agenten mit den zugestimmten Zwecken fur diese Daten, die durch die mit dem Datensubjekt assoziierte Privatsphärenrichtlinie spezifiziert werden, kompatibel ist, und ferner umfassend:
(a) Spezifizieren eines Datenschemas, das einen Graph mit mehreren durch Bogen verbundene Knoten umfasst, wobei die Knoten Posten personlicher Daten repräsentieren und die Bogen Routen repräsentieren, durch die das System zwischen den Knoten navigieren kann;
(b) in leder Privatsphärenrichtlinie Assoziieren jeweiliger zugestimmter Zwecke mit den Knoten und Bogen als einen Ausdruck zugestimmter Zwecke; und
(c) Gestatten der Durchquerung eines Bogens nur dann, wenn der aktuelle Verarbeitungszweck mit dem mit diesem Bogen assoziierten zugestimmten Zweck kompatibel ist, und Gestatten des Zugriffs auf einen Knoten nur dann, wenn der aktuelle Verarbeitungszweck mit dem mit diesem Knoten assoziierten zugestimmten Zweck kompatibel ist, indem der Ort in dem Datenschema (20) und der Ort in der Privatsphärenrichtlinienstruktur (24) verfolgt wird, um **dadurch** die Route zu verfolgen, auf der in dem Datenschema (20) zu dem aktuellen Knoten navigiert wurde.

4. Verfahren nach Anspruch 3, wobei das Datenschema mehrere Routen spezifiziert, die fur Navigation zu einem bestimmten Knoten verfugbar sind, und wobei jeweils verschiedene zugestimmte Zwecke mit den Routen assoziiert sind.

## Revendications

1. Système de traitement de données comprenant :
(a) un moyen de stockage de données (11) pour stocker des données personnelles relatives à une pluralité de sujets de données ;
(b) au moins un agent (12) pour accéder aux données ; et
(c) un moyen de contrôle d'accès (13) pour contrôler l'accès aux données personnelles par l'agent conformément aux souhaits des sujets de données ;
(d) un moyen pour définir une structure de politique de confidentialité (24) comprenant une pluralité de politiques de confidentialité standard, chaque politique de confidentialité spécifiant un ensemble respectif d'intentions consenties pour les données personnelles en termes d'une expression consistant en un ensemble d'identificateurs d'intentions primitives combinés à l'aide d'opérateurs logiques, le nombre de politiques de confidentialité étant sensiblement plus faible que le nombre de sujets de données ;
(e) un moyen pour stocker, pour chacun des sujets de données, une référence à une des politiques de confidentialité, associant de cette manière une des politiques de confidentialité à chaque sujet de données, chaque politique de confidentialité pouvant ainsi être partagée entre une pluralité de sujets de données ;
(f) un moyen pour associer une intention de traitement en cours audit agent ; et
(g) un moyen pour autoriser ledit agent à accéder à des données personnelles relatives à un sujet de données uniquement si l'intention de traitement en cours de l'agent est compatible avec les intentions consenties pour ces données telles que spécifiées par la politique de confidentialité associée au sujet de données, et comprenant en outre :
(a) un moyen pour spécifier un schéma de données (20) comprenant un graphique comportant une pluralité de noeuds reliés par des arcs, les noeuds représentant des éléments de données personnelles et les arcs représentant des chemins par lesquels le système peut naviguer entre les noeuds ;
(b) chacune de ladite pluralité de politiques de confidentialité comprenant un moyen pour associer des intentions consenties respectives auxdits noeud et arcs en tant qu'expression d'intention consentie ; et
(c) ledit moyen de contrôle d'accès autorisant la traversée d'un arc uniquement si ladite intention de traitement en cours est compatible avec l'intention consentie associée à cet arc, et autorisant l'accès à un noeud uniquement si ladite intention de traitement en cours est compatible avec l'intention consentie associée à ce noeud en gardant trace de l'emplacement dans le schéma de données (20) et de l'emplacement dans la structure de politique de confidentialité (24), gardant de cette manière trace du chemin par lequel le noeud en cours a été atteint dans le schéma de données (20).

2. Système tel que revendiqué dans la revendication 1, dans lequel ledit schéma de données spécifie une pluralité de chemins disponibles pour atteindre un noeud particulier, et dans lequel différentes intentions consenties sont respectivement associées auxdits chemins.

3. Procédé informatique pour contrôler l'accès par au moins un agent à des données personnelles relatives à une pluralité de sujets de données conformément aux souhaits des sujets de données,
le procédé comprenant les étapes consistant à :
(a) définir une structure de politique de confidentialité (24) comprenant une pluralité de politiques de confidentialité standard, chaque politique de confidentialité spécifiant un ensemble respectif d'intentions consenties pour les données personnelles en termes d'une expression consistant en un ensemble d'identificateurs d'intentions primitives combinés à l'aide d'opérateurs logiques, le nombre de politiques de confidentialité étant sensiblement plus faible que le nombre de sujets de données ;
(b) stocker, pour chacun des sujets de données, une référence à une des politiques de confidentialité, associant de cette manière une des politiques de confidentialité à chaque sujet de données, chaque politique de confidentialité pouvant ainsi être partagée entre une pluralité de sujets de données ;
(c) associer une intention de traitement en cours audit agent ; et
(d) autoriser ledit agent à accéder à des données personnelles relatives à un sujet de données uniquement si l'intention de traitement en cours de l'agent est compatible avec les intentions consenties pour ces données telles que spécifiées par la politique de confidentialité associée au sujet de données, et comprenant en outre les étapes consistant à :
(a) spécifier un schéma de données comprenant un graphique comportant une pluralité de noeuds reliés par des arcs, les noeuds représentant des éléments de données personnelles et les arcs représentant des chemins par lesquels le système peut naviguer entre les noeuds ;
(b) dans chacune desdites politiques de confidentialité, associer des intentions consenties respectives auxdits noeuds et arcs en tant qu'expression d'intention consentie ; et
(c) autoriser la traversée d'un arc uniquement si ladite intention de traitement en cours est compatible avec l'intention consentie associée à cet arc, et autoriser l'accès à un noeud uniquement si ladite intention de traitement en cours est compatible avec l'intention consentie associée à ce noeud en gardant trace de l'emplacement dans le schéma de données (20) et de l'emplacement dans la structure de politique de confidentialité (24), gardant de cette manière trace du chemin par lequel le noeud en cours a été atteint dans le schéma de données (20).

4. Procédé tel que revendiqué dans la revendication 3, dans lequel ledit schéma de données spécifie une pluralité de chemins disponibles pour atteindre un noeud particulier, et dans lequel différentes intentions consenties sont respectivement associées auxdits chemins.
